Europäisches Patentamt

(19) European Patent Office

Office européen des brevets

(11) Numéro de publication: **0 102 865**
**B1**

(12) # FASCICULE DE BREVET EUROPÉEN

(45) Date de publication du fascicule du brevet:
14.01.87

(51) Int. Cl.⁴: **F 17 C 13/12,** G 01 M 3/38

(21) Numéro de dépôt: 83401510.9

(22) Date de dépôt: 22.07.83

(54) Réservoir de gaz liquéfié muni d'un dispositif de détection des fuites de sa barrière secondaire et procédé correspondant de détection des fuites.

(30) Priorité: 03.08.82 FR 8213559

(43) Date de publication de la demande:
14.03.84 Bulletin 84/11

(45) Mention de la délivrance du brevet:
14.01.87 Bulletin 87/3

(84) Etats contractants désignés:
BE GB IT NL SE

(56) Documents cité:
FR-A-2 294 439
FR-A-2 502 289
FR-A-2 515 347
GB-A-1 552 821

(73) Titulaire: APPLIED THERMODYNAMICS & L.N.G.
SERVICE Société à Responsabilité Limiteé de
droit français, 28 rue du Commandant Vesco,
F-76310 Sainte- Adresse (FR)
Titulaire: GAZ DE FRANCE, 23, rue Philibert
Delorme, F-75017 Paris (FR)

(72) Inventeur: Guilhem, Jean Robert, 28, rue du
Commandant Vesco, F-76310 Sainte- Adresse (FR)

(74) Mandataire: Hoisnard, Jean- Claude, Cabinet Beau
de Lomenie 55, rue d'Amsterdam, F-75008 Paris
(FR)

## Description

Le développement relativement récent des navires transportant du méthane liquéfié, ou, plus généralement, du gaz naturel liquéfié, à basse température, a révélé l'existence de nombreux problèmes techniques non encore tous résolus.

Le gaz est liquéfié à très basse température (de l'ordre de -160° C) à l'intérieur de réservoirs comprenant trois parois successives, en principe étanches, c'est tout au moins ce qui est recherché, des matériaux d'isolations thermiques étant interposés entre deux parois successives. De manière évidente, les contraintes thermiques sont importantes, et malgré l'adoption de procédés élaborés de fabrication des parois, des fuites se produisent en service dans ces parois. S'il est relativement facile de détecter les fuites des parois extrêmes, il est, par contre, très difficile de localiser celles de la paroi intermédiaire.

L'invention a pour but de proposer une disposition nouvelle permettant de détecter les fuites de cette paroi intermédiaire sans rendre nécessaire, en ce qui concerne la détection, la destruction d'aucune des parois extrêmes. Par ailleurs, si cette invention a eu pour origine les problèmes de maintien en service des navires méthaniers, elle reçoit évidemment une application très générale à tout réservoir de gaz liquéfié à basse température, monté, ou non sur un navire transporteur.

L'invention a donc d'abord pour objet un réservoir susceptible de contenir un gaz liquéfié à basse température, tel que du gaz naturel liquéfié, constitué par:
- les caractéristiques mentionnées dans le préambule de la revendication 1 connues du document FR-A-2294 439, et par les caractéristiques mentionnées dans la partie caractérisante de la revendication 1.

Les avantageuses dispositions suivantes sont, en outre, de préférence adoptées:
- le dispositif de détection de la température est constitué par un thermographe;
- le dispositif de détection de la température est d'un type optique, tel qu'une caméra, et est susceptible de permettre le repérage des zones de la face interne de la barrière primaire sur lesquelles sont susceptibles de subsister, au cours d'un réchauffage de la cuve, des dépôts de givre dudit gaz inerte de dégazage.

L'invention a également pour objet un procédé de détection des fuites éventuelles de la barrière secondaire d'un réservoir conforme à l'une des définitions précédentes, selon lequel, à partir de la cuve contenant du gaz liquéfié à basse température,
- on injecte dans l'enceinte secondaire, du fluide de sécurité,
- on procède ensuite à l'évacuation du gaz liquéfié contenu dans la cuve, et,
- on détecte les zones des dépôts éventuels de givre dudit gaz de sécurité ayant traversé les brèches de fuite de la barrière secondaire et s'étant formé sur les zones de la face de la barrière primaire délimitant l'enceinte primaire disposées en regard desdites brèches, par détection de la différence de température des zones de la barrière primaire supportant du givre de celles exemptes de givre.

Préférentiellement, entre l'évacuation du gaz liquéfié et la détection des dépôts de givre,
- on dégaze la cuve et on la réchauffe progressivement par injection dans cette cuve de gaz inerte chaud,
- on constate l'établissement d'un dépôt sensiblement uniforme de givre de ce gaz inerte sur la face interne de la barrière primaire,
- on poursuit le réchauffage de la cuve jusqu'à disparition presque complète dudit dépôt sensiblement uniforme, et,
- par observation visuelle, on repère les zones isolées de la face interne de la barrière primaire sur lesquelles subsistent encore des dépôts de givre correspondant aux zones de la face de cette barrière primaire opposée à ladite face interne qui supportent également des dépôts de givre de gaz de sécurité.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:
- la figure 1 est une coupe transversale d'un navire transporteur de méthane liquéfié, conforme à l'invention; et,
- la figure 2 est une coupe suivant II-II de la figure 1.

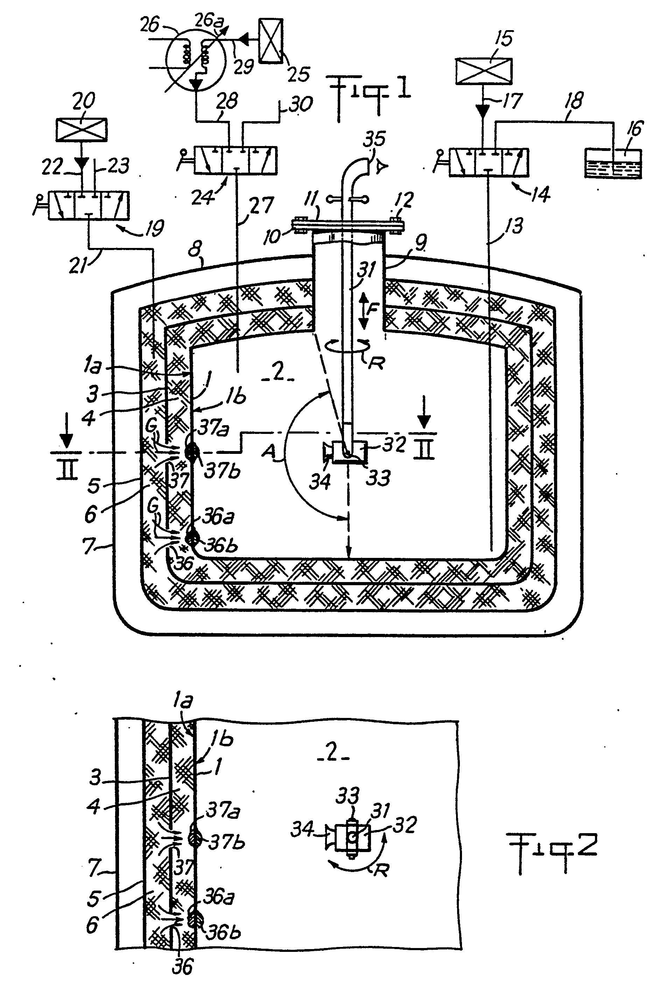

Le réservoir représenté comporte:
- une première paroi étanche 1, dite barrière primaire, qui délimite la cuve 2 proprement dite susceptible de contenir le gaz liquéfié à basse température,
- une deuxième paroi étanche 3, dite barrière secondaire, qui délimite avec la barrière primaire 1 une enceinte 4, dite enceinte primaire, qui est emplie par un matériau poreux d'isolation thermique,
- une troisième paroi étanche 5, qui constitue la double coque du navire et qui délimite avec la barrière secondaire 3 une enceinte 6, dite enceinte secondaire, emplie par un matériau poreux d'isolation thermique,
- la coque 7 proprement dite, avec son pont supérieur 8,
- un conduit (trappe) 9 de grand diamètre (1m à 1,5m), qui traverse le plafond des barrières primaire 1, secondaire 3, et de la double coque 5, ainsi que le pont supérieur 8, en étant adapté de manière étanche à ces diverses parois, avec la possibilité d'avoir sa bride supérieure 10 obturée par un couvercle 11, boulonné (12) par exemple,
- un conduit 13, qui plonge à l'intérieur de la cuve 2,
- un distributeur 14 à trois positions, auquel le conduit 13 est relié,

- une source de gaz liquéfié 15,
- un réservoir externe de gaz liquéfié 16,
- un conduit 17 reliant la source 15 au distributeur 14,
- un conduit 18 reliant le réservoir 16 au distributeur 14,
- un distributeur à trois positions 19,
- une source de dioxyde de carbone sous forme gazeuse 20,
- des conduits 21, 22 et 23 qui relient le distributeur 19 respectivement, à l'enceinte secondaire 6, à la source 20, et à l'extérieur du réservoir,
- un distributeur à trois positions 24,
- une source de dioxyde de carbone 25,
- un échangeur de chaleur 26, réchauffeur de dioxyde de carbone,
- des conduits 27, 28, 29 et 30 qui relient, respectivement, le conduit 27, la cuve 2 au distributeur 24; le conduit 28, l'échangeur de chaleur 26 au distributeur 24; le conduit 29, la source 25 à l'échangeur de chaleur 26; et, le conduit 30, le distributeur 24 à l'extérieur du réservoir,
- un support cylindrique vertical 31, qui est monté sur le couvercle 11 de la bride 10, rotatif (flèche R) autour de son axe, et réglable en translation (flèche F) le long de son axe, à la manière du tube d'observation d'un périscope de sous-marin,
- une caméra 32, qui est montée à l'extrémité du support 31 située à l'intérieur de la cuve 2 et est susceptible d'être orientée autour d'un axe de pivotement horizontal 33 par rapport au support 31, de manière, à l'intérieur d'un angle de débattement maximal A autour de l'axe 33, à pouvoir observer la totalité des faces internes de la barrière primaire 1 disposées devant son objectif 34.

Cette caméra 32 est d'un type connu, cinématographique ou de télévision, et dans ce dernier cas, permet l'observation simultanée sur un écran 35 des vues enregistrées.

Aux emplacements de fissures 36, 37 de la barrière secondaire 3, on constate le passage vers l'enceinte primaire 4 de dioxyde de carbone (flèche G). Ce gaz diffuse à travers le matériau isolant contenu dans l'enceinte 4, jusqu'à atteindre la face 1a de la barrière primaire 1 orientée vers la barrière secondaire 3. Sensiblement en regard de chaque fissure 36, 37, se forme sur cette face 1a, un glaçon 36a, 37____de dioxyde de carbone sublimé. Par ailleurs, on note également que, sur la face 1b de la barrière primaire 1 opposée à la face 1a, sensiblement de l'autre côté de la barrière primaire 1 où sont les glaçons 36a, 37a, se sont formés deux autres glaçons de dioxyde de carbone 36b, 37b, tout au moins dans la phase représentée du procédé de détection des fissures 36, 37.

Restent à définir les diverses positions des distributeurs 14, 19, 24.

Les trois positions du distributeur 14 correspondent:
- la première, à la mise en communication des conduits 13 et 17, et, à l'obturation du conduit 18;
- la deuxième position, à l'obturation des conduits 13, 17 et 18; et,
- la troisième position, à la mise en communication des conduits 13 et 18, et à l'obturation du conduit 17.

Les trois positions du distributeur 19 correspondent:
- la première position, à la mise en communication des conduits 21 et 22, et, à l'obturation du conduit 23;
- la deuxième position, à l'obturation des conduits 21, 22 et 23; et,
- la troisième position, à la mise en communication des conduits 21 et 23, et, à l'obturation du conduit 22.

Les trois positions du distributeur 24 correspondent:
- la première position, à la mise en communication des conduits 27 et 28, et, à l'obturation du conduit 30;
- la deuxième position, à l'obturation des conduits 27, 28 et 30; et,
- la troisième position, à la mise en communication des conduits 27 et 30, et, à l'obturation du conduit 28.

La détection réalisée des fissures 36, 37 va maintenant être exposée.

Le navire étant revenu au port avec sa cargaison de gaz liquéfié dans ces cuves 2, on commence par vider ses cuves en plaçant le distributeur 14 dans sa troisième position. Le gaz liquéfié contenu dans la cuve 2 peut ainsi en être extrait à l'aide d'une pompe (non représentée) et être dirigé vers le réservoir 16.

Dans le même temps, du gaz carbonique produit par la source 20 est dirigé dans l'enceinte secondaire 6, par les conduits 22 et 21, et le distributeur 19, alors placé dans sa première position. Compte tenu de la température très basse (de l'ordre de -160° C) de la barrière primaire 1, on constate, dans la zone des fissures 36, 37 de la barrière secondaire 3, la diffusion (G) du gaz carbonique et sa sublimation sous forme de glaçon 36a, 37a, sur la face 1a de la barrière primaire 1.

La cuve 2 ayant été vidée du gaz liquéfié qu'elle contenait, doit également, pour des raisons de sécurité, être vidée des vapeurs de ce gaz qui y subsistent et en outre être progressivement réchauffée. A cet effet, on y introduit un gaz inerte chauffé. On fait traverser, à ce gaz inerte provenant de la source 25, le réchauffeur 26, puis, par les conduits 28 et 27, et le distributeur 24 placé dans sa première position, on injecte ce gaz chaud dans la cuve 2.

Ce gaz, plus lourd que les vapeurs de gaz de méthane, chasse ces vapeurs hors de la cuve 2. Par ailleurs, au contact de la barrière primaire 1, il givre et recouvre 1a face 1b d'un voile de givre qui, au fur et à mesure de l'avancement du réchauffage, se dissipera, sauf aux emplacements des glaçons 36b, 37b qui sont maintenus froids plus longtemps que le reste de la barrière primaire 1, du fait de la présence des glaçons 36a, 37a.

C'est le moment particulier pendant lequel la caméra 32 doit inspecter visuellement et enregistrer l'état de la face 1b pour repérer l'emplacement des glaçons 36b, 37b: le givre ayant disparu, la face métallique 1b est brillante, sauf aux emplacements des glaçons 36b, 37b. Or, on sait que les fissures 36 et 37 sont voisines des emplacements de ces glaçons, ce qui évite d'avoir à endommager la totalité de la barrière primaire 1 pour retrouver les quelques fissures 36, 37 de la barrière secondaire 3.

Il y a lieu de remarquer qu'en variante, d'ailleurs plus générale que la réalisation représentée, et sans qu'il y ait à choisir un gaz inerte particulier pouvant se sublimer en glaçons 38b, 37b pour réchauffer la barrière primaire 1, on peut détecter directement les emplacements des glaçons 38a, 37a sans les voir, en remplaçant la caméra 32 par un thermographe ou analogue, susceptible de détecter et de localiser les points les plus froids de la barrière primaire 1 en cours de réchauffage.

On aura également noté qu'au cours du transport du gaz liquéfié, la caméra n'est évidemment pas disposée à l'intérieur de la cuve 2, le couvercle perforé 11 étant alors remplacé par un couvercle plein.

Enfin, le réglage du réchauffage de la cuve 2 est rendu possible par réglage (26a) du débit de dioxyde de carbone traversant l'échangeur thermique 26.

L'invention n'est au reste pas limitée aux réalisations décrites, mais en couvre au contraire toutes les variantes qui pourraient leur être apportées sans sortir de leur cadre, ni de leur esprit.

### Revendications

1. Réservoir susceptible de contenir un gaz liquéfié à basse température, tel que du gaz naturel liquéfié, constitué par:
   - une première paroi (1), dite barrière primaire, délimitant la cuve (2) proprement dite susceptible de contenir le gaz liquéfié,
   - une deuxième paroi (3), dite barrière secondaire, qui entoure la barrière primaire en en étant écartée, une enceinte, dite primaire (4), étant ménagée entre ces barrières primaire et secondaire,
   - une troisième paroi (5), dite paroi externe, qui entoure la barrière secondaire (3), en en étant écartée, une enceinte, dite secondaire (6), étant ménagée entre ces barrière secondaire et paroi externe,
   - un remplissage de matériau thermiquement isolant, qui est contenu dans l'enceinte primaire,
   - de préférence, un autre remplissage de matériau thermiquement isolant, qui est contenu dans l'enceinte secondaire,
   - une trappe (9) reliant le plafond de la cuve (2) à l'extérieur du réservoir et munie d'une ouverture d'introduction à l'intérieur de la cuve, et,
   - un dispositif (32) de détection de la température des diverses zones de la barrière primaire (1) susceptible d'être introduit à l'intérieur de la cuve (2) par ladite ouverture caractérisé en ce qu'il comprend en outre:
   - un conduit (27) d'admission dans la cuve (2) d'un gaz inerte (25), dit de dégazage, susceptible, après évacuation hors de la cuve du gaz liquéfié, de réaliser l'évacuation du reliquat de ce gaz présent sous forme gazeuse,
   - un conduit (21) de gaz de sécurité pour l'admission d'un tel gaz dans l'enceinte secondaire (6), ce gaz de sécurité possédant, sous la pression régnant dans l'enceinte primaire, une température de sublimation, d'une part, inférieure à la température régnant en service dans l'enceinte secondaire, d'autre part, supérieure à la température de la barrière primaire avant un éventuel réchauffage, et,
   - un support (31) sur lequel est monté ledit dispositif de détection (32) de la température, et susceptible d'être adapté à la trappe (9).

2. Réservoir selon la revendication 1, caractérisé en ce que le dispositif de détection de la température est constitué, de manière connue en soi, par un thermographe.

3. Réservoir selon la revendication 1, caractérisé en ce que le dispositif de détection de la température est d'un type optique, tel qu'une caméra (32), et est susceptible de permettre le repérage des zones de la face interne (1b) de la barrière primaire (1) sur lesquelles sont susceptibles de subsister, au cours d'un réchauffage (26) de la cuve, des dépôts de givre (36b, 37b) dudit gaz inerte de dégazage.

4. Procédé de détection des fuites éventuelles de la barrière secondaire (3) d'un réservoir selon l'une quelconque des revendications 1 à 3, caractérisé en ce qu'à partir de la cuve contenant du gaz liquéfié à basse température,
   - on injecte dans l'enceinte secondaire (6) du fluide de sécurité,
   - on procède ensuite à l'évacuation (14-18-16) du gaz liquéfié contenu dans la cuve (2), et,
   - on détecte (32) les zones (36a, 37a) des dépôts éventuels de givre dudit gaz de sécurité ayant traversé les brèches de fuite (36, 37) de la barrière secondaire (3) et s'étant formé sur les zones de la face (1a) de la barrière primaire (1) délimitant l'enceinte primaire (4) disposées en regard desdites brèches, par détection de la différence de température des zones (36b, 37b) de la barrière primaire (1) supportant du givre de celles exemptes de givre.

5. Procédé selon la revendication 4, elle-même selon la revendication 3, caractérisé en ce qu'entre l'évacuation du gaz liquéfié et la détection des dépôts de givre,
   - on dégaze la cuve (2) et on la réchauffe progressivement par injection (27) dans cette cuve de gaz inerte (25) chaud (26), on constate l'établissement d'un dépôt sensiblement uniforme de givre de ce gaz inerte sur la face interne (1b) de la barrière primaire (1),

- on poursuit le réchauffage de la cuve (2) jusqu'à disparition presque complète dudit dépôt sensiblement uniforme, et,

- par observation visuelle, on repère les zones isolées (36b, 37b) de la face interne (1b) de la barrière primaire (1) sur lesquelles subsistent encore des dépôts de givre correspondant aux zones (36a, 37a) de la face (1a) de cette barrière primaire opposée à ladite face interne (1b) qui supportent également des dépôts de givre de gaz de sécurité.

## Patentansprüche

1. Behälter zur Aufnahme eines Flüssiggases mit niedriger Temperatur, wie Flüssig-Erdgas, gebildet durch:

- eine erste Wand (1), genannt erste Barriere, die die eigentliche Wanne (2) zur Aufnahme des Flüssiggases begrenzt,

- eine zweite Wand (3), genannt zweite Barierre, die die erste Barierre in einem Abstand davon umgibt, wobei ein erster Raum (4) zwischen dieser ersten und zweiten Barriere vorgesehen ist,

- eine dritte Wand (5), genannt Außenwand, die die zweite Barriere (3) in einem Abstand davon umgibt, wobei ein zweiter Raum (6) zwischen dieser zweiten Barriere und dieser Außenwand vorgesehen ist,

- eine im ersten Raum enthaltene Füllung aus wärmeisolierendem Material,

- vorzugsweise eine weitere, im zweiten Raum enthaltene Füllung aus wärmeisolierendem Material,

- eine Luke (9), die eine Verbindung zwischen der Decke der Wanne (2) und der Umgebung des Behälters bildet und mit einer Einleitöffnung in das Innere der Wanne versehen ist,

- eine Einrichtung (32) zur Detektion der Temperatur der verschiedenen Zonen der ersten Barriere (1), welche über besagte Öffnung in das Innere der Wanne (2) einführbar ist, dadurch gekennzeichnet, daß er weiters umfaßt:

- eine Leitung (27) zum Zuführen eines inerten Entgasungsgases in die Wanne (2), das nach Entleeren des Flüssiggases aus der Wanne die Entleerung der in gasförmiger Form vorhandenen Restmenge dieses Gases bewirken kann,

- eine Sicherheitsgas-Leitung (21) zum Zuführen eines solchen Gases in den zweiten Raum (6), welches Sicherheitsgas unter dem im ersten Gehäuse herrschenden Druck eine Sublimationstemperatur aufweist, die einerseits niedriger als die bei Betrieb im zweiten Raum herrschende Temperatur und anderseits höher als die Temperatur der ersten Barriere vor einem möglichen Aufheizen ist, und

- einen Träger (31), an dem die Temperatur-Detektionseinrichtung (32) montiert und der an die Luke (9) anpaßbar ist.

2. Behälter nach Anspruch 1, dadurch gekennzeichnet, daß die Temperatur-Detektionseinrichtung auf an sich bekannte Weise aus einem Thermographen besteht.

3. Behälter nach Anspruch 1, dadurch gekennzeichnet, daß die Temperatur-Detektionseinrichtung vom optischen Typ, wie eine Kámera (32), ist und die Ortung der Zonen an der Innenseite (1b) der ersten Barriere (1), an denen während des Aufheizens (26) der Wanne Vereisungsablagerungen (36b, 37b) des inerten Entgasungsgases vorhanden sein können, ermöglichen kann.

4. Verfahren zur Detektion möglicher Lecks der zweiten Barriere (3) eines Behälters nach einem der Ansprüche 1 bis 3, dadurch gekennzeichnet, daß man, ausgehend von der Flüssiggas mit niedriger Temperatur enthaltenden Wanne

- Sicherheitsfluidium in den zweiten Raum (6) einleitet,

- danach die Entleerung (14-18-16) des in der Wanne (2) enthaltenen Flüssiggases vornimmt und

- die Zonen (36a, 37a) möglicher Vereisungsablagerungen des Sicherheitsgases, das die Lecklücken (36, 37) der zweiten Barriere (3) durchdrungen hat und die sich an den den Lücken gegenüberliegenden Zonen der Fläche (1a) der den ersten Raum (4) begrenzenden ersten Barriere (1) gebildet haben, durch Detektion der Temperaturdifferenz der Zonen (36b, 37b) der ersten Barriere (1) mit Vereisungen und jener ohne Vereisungen ortet.

5. Verfahren nach Anspruch 4, selbst wieder nach Anspruch 3, dadurch gekennzeichnet, daß zwischen der Entleerung des Flüssiggases und der Detektion der Vereisungsablagerungen

- die Wanne (2) entgast und durch Einleiten (27) von heißem (26) Inertgas (25) in diese Wanne allmählich aufgeheizt wird,

- die Bildung eines im wesentlichen gleichmäßigen Vereisungsniederschlags dieses Inertgases an der Innenseite (1b) der ersten Barriere (1) festgestellt wird,

- das Aufheizen der Wanne (2) fortgesetzt wird, bis der im wesentlichen gleichmäßige Niederschlag fast vollkommen verschwunden ist, und

- durch visuelle Beobachtung die vereinzelten Zonen (36b, 37b) der Innenseite (1b) der ersten Barriere (1), auf denen sich noch Vereisungsablagerungen entsprechend den Zonen (36a, 37a) der der Innenseite (1b) gegenüberliegenden Seite (1a) dieser ersten Barriere, die auch Vereisungsablagerungen des Sicherheitsgases tragen, befinden, geortet werden.

## Claims

1. Tank designed to contain a liquefied gas at low temperature, such as liquefied natural gas, constituted by:

- a first wall (1), so-called primary barrier, limiting the main tank (2) able to contain the liquefied gas,

- a second wall (3), so-called secondary barrier, surrounding the primary barrier being spaced out of it, a space, so-called primary space (4), existing between those two barriers primary and secondary,

- a third wall (5), so-called external wall, surrounding the secondary barrier (3), being spaced out of it, a space, so-called secondary space (6) existing between these two barriers primary and secondary,

- a filling of thermally insulating material which is contained within primary space,

- preferably another filling of thermally insulating material which is contained within primary space,

- an aperture duct (9) connecting the ceiling of the tank (2) to the exterior of the tank and is provided with a hole to enter the tank, and,

- a temperature sensing means (32) for sensing temperatures at selected areas of the primary barrier (1) able to be introduced into the tank (2) through said hole, characterized in that it further comprises:

- a pipe (27) feeding inert gas (25) into the tank (2), so-called gas freeing pipe, able after the liquid gas has been unloaded from the tank, to vent what is remaining of the product under gaseous form, and,

- a pipe (21) feeding safety gas into secondary space (6), this safety gas having, under the pressure prevailing within the primary space, a sublimation temperature, on the one hand, lower than the temperature prevailing in service within secondary space, on the other hand, higher than the primary barrier temperature before a possible warming-up,

- a support (31) on which is mounted said temperature sensing means (32) liable to be fitted into said aperture duct (9).

2. Tank according to claim 1, characterized in that said temperature sensing means is in known manner, a thermograph.

3. Tank according to claim 1, characterized in that said temperature sensing means is of optical type, such as a camera, and is able to localize the areas of the inner face (1b) of the primary barrier (1) on which some aggregates (36b, 37b) of frost of said gas-freeing inert gas may persist during a warming-up operation (26) of the tank.

4. Process for localizing possible failures of the secondary barrier (3) of a tank according to any one of claims 1 to 3, characterized in that starting from a tank containing liquefied gas at low temperature,

- safety fluid is fed into secondary space (6),

- the liquid gas contained in the tank (2) is unloaded (14, 18, 16), and

- the areas (36UA , 37a) of possible aggregates of frost of the said safety gas having crossed the leaking failures (36, 37) of the secondary barrier (3) and having grown on the areas of the face (1a) of primary barrier (1) limiting the primary space (4) and facing said failures, are localized using the temperature difference between the areas (36b, 37b) of the primary barrier (1) covered by frost and those without frost.

5. Process according to claim 4, itself according to claim 3, characterized in that between the tank unloading and the localization of frost aggregates,

- the tank (2) is gas-freed and is progressively warmed up, warm (26) inert (25) gas being injected into said tank,

- a quasi uniform layer of frost of this inert gas appears on the inner face (1b) of the primary barrier (1),

- the warming-up of the tank (2) is going on until said quasi-uniform frost layer is almost disappeared and,

- by visual inspection, the islets (36b, 37b) of the inner face (1b) of the primary barrier (1) where some frost aggregates are still remaining are localized; said islets are corresponding to the areas (36a, 37a) of the face (1b) of the primary barrier opposite to said inner face (1b) where some aggregates of frost of safety gas exist also.

Fig 1

Fig 2